(19)

**Europäisches Patentamt**

**European Patent Office**

**Office européen des brevets**

(11) **EP 4 407 483 A1**

(12) **EUROPEAN PATENT APPLICATION**

(43) Date of publication:
**31.07.2024 Bulletin 2024/31**

(21) Application number: **23153722.6**

(22) Date of filing: **27.01.2023**

(51) International Patent Classification (IPC):
**G06F 18/214** (2023.01)  **G06F 18/2415** (2023.01)
**G06V 10/143** (2022.01)  **G06V 20/58** (2022.01)

(52) Cooperative Patent Classification (CPC):
**G06F 18/214; G06F 18/2415; G06V 10/143;
G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• **LUSZEK, Moritz
  32760 Detmold (DE)**
• **ROESLER, Simon
  41460 Neuss (DE)**

(74) Representative: **Bardehle Pagenberg
Partnerschaft mbB
Patentanwälte Rechtsanwälte
Prinzregentenplatz 7
81675 München (DE)**

(54) **TRAINING BEV OBJECT DETECTION MODELS**

(57)    The present invention relates to a computer-implemented method for training a birds-eye-view, BEV, object detection model, the method comprising the steps of: inputting a training sample into the model, wherein the training sample comprises a BEV image comprising a plurality of pixels, and a plurality of target confidence values, wherein each pixel of the plurality of pixels is associated with a target confidence value of the plurality of target confidence values; receiving as output from the model at least a plurality of predicted confidence values, wherein each predicted confidence value is associated with a pixel of the plurality of pixels; and adjusting a parameter set of the model according to a loss, wherein the loss is based at least on the plurality of predicted confidence values and the plurality of target confidence values. In addition, a corresponding computer-implemented method for BEV object detection, a BEV model as well as a computer program, data processing device and vehicle is disclosed.

Fig. 2

**Description**

**Field of the invention**

The present disclosure relates to a computer-implemented method for training a birds-eye-view (BEV) object detection model, a BEV object detection model, a method for BEV object detection using the trained BEV object detection model as well as a corresponding computer program, device and vehicle.

**Background**

Most state-of the art advanced driving assistance systems (ADAS) rely on different sensor techniques, each having advantages and disadvantages. Accordingly, combining these techniques is a common way of achieving a comprehensive solution.

These sensor techniques for example include vision-based sensors (e.g., cameras), Light detection and Ranging (LiDAR) sensors or short-, medium-, or long-range radar. Cameras for example provide accurate semantic information, but less reliable depth information. Radar in general provides robust information regarding distance and velocity but is highly sensitive and lacks high resolution due to sparsity issues. In contrast, while LiDAR provides accurate 3D point clouds, this also comes with the issue of expensive computational costs.

Accordingly, each sensor has specific use cases best suited for. LiDAR is often used for environment mapping, blind spot detection or park assistance. Cameras are often used for specific detection tasks (e.g., traffic sign recognition, lane departure warning), short-, medium-range radar for cross traffic alert, blind spot detection or rear collision warning and long-range radar for adaptive cruise control, pedestrian detection, emergency braking or collision avoidance.

Due to the different properties of each sensor type and thus also complexity regarding processing, the corresponding processing techniques have advanced to different levels of sophistication. In particular, processing of images is already far advanced covering a wide variety of difficult scenarios. Progress was for example made from two-stage detector to anchor based one-stage detector to anchor-free approaches. Common to these techniques for object detection is to define pixels within a bounding box of an object to be valid targets (i.e., the corresponding pixel is used for classification and/or regression).

One main challenge is the fact that sensors like radar or LiDAR deliver a 3-dimensional instead of a 2-dimensional view including distance to objects. Furthermore, these sensors can only "see" up until the first point(s) of reflection resulting in a mere representation of outlines of the object. The area behind these first point(s) remains unobserved. Accordingly, object detection happens in largely information free areas, which may negatively affect the prediction accuracy - especially when simply applying a *centerness* approach (i.e., using center pixels of an image for detection) because the center of the object is in most cases within this information free area. Therefore, also corresponding methods used for training underlying artificial intelligence (AI) models have to be adapted to be able to handle these differences in corresponding training data.

Therefore, there is a need to provide an approach that is adapted to the peculiarities of respectively generated BEV images for object detection for BEV sensor images.

**Summary of the invention**

Aspects of the present disclosure are set out in the accompanying independent and dependent claims. Combinations of features from the dependent claims may be combined with features of the independent claims as appropriate and not merely as explicitly set out in the claims.

An aspect of the present invention relates to a computer-implemented method for training a birds-eye-view (BEV) object detection model, the method comprising the steps of: inputting a training sample into the model, wherein the training sample comprises: a BEV image comprising a plurality of pixels; and a plurality of target confidence values, wherein each pixel of the plurality of pixels is associated with a target confidence value of the plurality of target confidence values; receiving as output from the model at least a plurality of predicted confidence values, wherein each predicted confidence value is associated with a pixel of the plurality of pixels; and adjusting a parameter set of the model according to a loss, wherein the loss is based at least on the plurality of predicted confidence values and the plurality of target confidence values.

Providing the plurality of target confidence values enables the model to learn the importance/confidence of pixels within the BEV image or within the respective bounding box. The model may thus be able to detect corresponding object shapes and assign predicted confidence values to each pixel based on which an efficient (i.e., reliable and accurate) classification and/or regression can be conducted.

In a further aspect, a target confidence value of the plurality of target confidence values indicates an uncertainty value corresponding to the pixel of the plurality of pixels associated with the target confidence value; and wherein the plurality of target confidence values indicates a distribution of uncertainty values associated with the plurality of pixels.

With the confidence values indicating a respective uncertainty distribution, the lack of information value within the bounding box of the object is taken into account, which is due to the nature of the respective sensors only being able to "see" up until the first point of reflection.

In a further aspect, a shape of the distribution of uncertainty values depends on at least one of: a distance, position, rotation, size and/or class of an object within the BEV image.

Providing different shapes (e.g., "backline" if object information is available about the back part of an object, "L-Shape" if object information is available about the back part and a right or left part of the object or "U-shape" if object information is available about the back, right and left part of the object) increases the models accuracy when detecting objects and predicting corresponding confidence values.

In a further aspect, adjusting the parameter set of the model comprises: determining a subset of the plurality of predicted confidence values; and wherein the loss is based on the subset of the plurality of predicted confidence values and a corresponding subset of the plurality of target confidence values.

Limiting the prediction to a subset and thus adjusting of the parameter set of the model decreases the computational overhead of the training and may thus result in a faster convergence of the training.

In a further aspect, determining the subset of the plurality of predicted confidence values comprises: selecting the subset of the plurality of predicted confidence values based on label information associated with a subset of the plurality of pixels corresponding to the subset of the plurality of predicted confidence values.

Basing the decision regarding selection of the subset on label information has the advantage of being less dependent from the underlying sensor (e.g., already preprocessed data may be used instead of raw sensor data).

In a further aspect, determining the subset of the plurality of predicted confidence values comprises: selecting the subset of the plurality of predicted confidence values based on sensor information associated with a subset of the plurality of pixels corresponding to the subset of the plurality of predicted confidence values.

Basing the decision regarding selection of the subset on (available) sensor information has the advantage of having a data driven decision. This means, that only pixels which are actually backed up by sensor data (e.g., if input value of the sensor at the specific section is larger than a threshold depending on characteristics on the input data such as noise etc.) are eligible for being a target pixel.

In a further aspect, determining the subset of the plurality of predicted confidence values comprises: selecting the subset of the plurality of predicted confidence values based on a plurality of object detection scores; and wherein each object detection score of the plurality of object detection scores is associated with a pixel of a subset of the plurality of pixels corresponding to the subset of the plurality of predicted confidence values.

Basing the decision regarding selection of the subset on actual object detection scores (i.e., the model itself decides which pixels to select without further information like labels or sensor-back up) such as IoU and/or the highest predicted confidence values may result in the model learning the detection with less biasing and thus may result in a better generalization.

It is to be understood that also a combination of the aforementioned selection approaches is possible.

In a further aspect, the training sample further comprises a plurality of target value sets; wherein each pixel of the plurality of pixels is associated with a target value set of the plurality of target value sets; wherein the output of the model further comprises a plurality of predicted value sets; and wherein adjusting the parameter set of the model is further based on a loss between the plurality of predicted value sets and the plurality of target value sets.

Apart from the prediction of confidence values, the model may also be trained to predict a respective set of target values (e.g., usable for classification and/or regression such as binary classification whether pixel is part of a bounding box, left top and right bottom coordinates of the ground truth (GT) bounding box, class label of the object corresponding to the GT bounding box or distances from the pixel position to the respective boundaries of the GT bounding box).

In a further aspect, each pixel of the plurality of pixels is associated with an angle value and a distance value within the BEV image; or each pixel of the plurality of pixels is associated with first cartesian coordinate and a second cartesian coordinate.

The additional information associated with a pixel provides a way to more accurately determine the importance/confidence of the pixel. For example, based on the distance and/or rotation a respective shape of the object boundaries may be determined.

Another aspect relates to a computer-implemented method for BEV object detection, the method comprising the steps of: obtaining a BEV image comprising a plurality of pixels; inputting the BEV image into a BEV object detection model trained according to a method as outlined above; receiving, from the model, an output comprising at least a plurality of predicted confidence values; and detecting an object within the BEV image using the output of the model.

In a further aspect, the output of the model further comprises a plurality of predicted value sets; and wherein detecting the object within the BEV image comprises applying the plurality of predicted confidence values on the plurality of predicted value sets.

Applying the confidence values on the predicted value sets may have the effect of filtering the less important pixels. As a result, only the important target pixel(s) are used for the respective classification and/or regression task.

Another aspect relates to a BEV object detection mode trained according to the method as outlined above.

Another aspect relates to a data-processing device comprising means configured to perform the method(s) as outlined above and/or comprises the BEV object detection model as outlined above.

Another aspect of the invention relates to a computer program comprising instructions, which when executed by a computer, causes the computer to perform the method(s) as outlined above.

Yet another aspect of the invention relates to a vehicle comprising the aforementioned data-processing device and/or the BEV object detection model.

**Brief description of the drawings**

Various aspects of the present invention are described in more detail in the following by reference to the accompanying figures without the present invention being limited to the embodiments of these figures.

Fig. 1    depicts a traffic scenario used for describing aspects of the present invention.

Fig. 2    illustrates a first training sample for training a BEV object detection model according to aspects of the present invention.

Fig. 3    illustrates a second training sample for training a BEV object detection model according to aspects of the present invention.

**Detailed description**

In the following, aspects of the present invention are described in more detail.

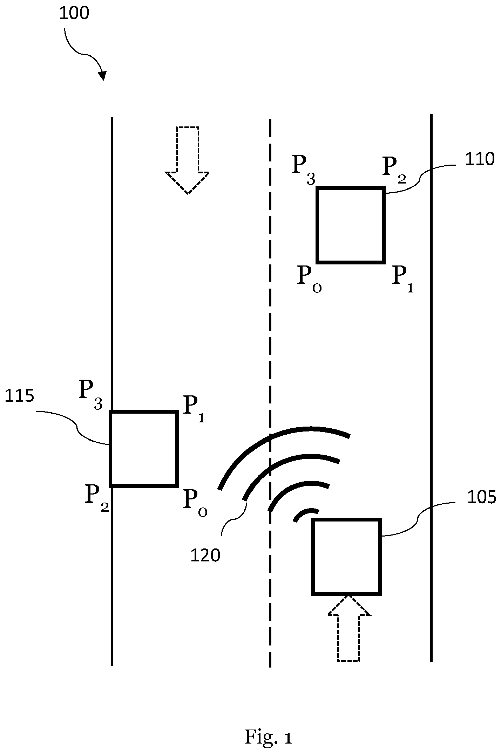

Fig. 1 depicts a traffic scenario 100 comprising an ego vehicle 105 on a road with road boundaries (indicated by the black vertical lines extending from top to bottom) and two further vehicles 110 and 115. The intended driving direction of the three vehicles 105, 110 and 115 is indicated by the dashed arrows. While vehicle 105 and vehicle 110 are moving, vehicle 115 may be in a parking position. Vehicle 105 may be equipped with sensors (e.g., radar, LiDAR etc.) observing and measuring a surrounding of the vehicle 105 as indicated by the signal waves 120. Vehicles 110 and 115 are represented by their corresponding bounding box, wherein each corner point is marked as $P_0$ - $P_3$ depending on a distance between the respective corner point to the vehicle 105.

The observed and measured sensor data may allow to generate a birds-eye view (BEV) image/representation of the traffic scenario 100. The BEV image generated this way may be used as one or more training data sample(s) for training a corresponding BEV object detection model.

Training method

Training a BEV object detection model may comprise three main steps.

First, inputting a training sample into the model. The training sample may comprise a BEV image. The BEV image may comprise a plurality of pixels. Each pixel may be associated with an angle value and distance value within the BEV image (i.e., a polar representation). Each pixel may be associated with a first cartesian coordinate and a second cartesian coordinate (i.e., cartesian grid representation). In addition, the training sample may comprise a plurality of target confidence values. Each pixel of the plurality of pixels may be associated with a target confidence value of the plurality of target confidence values. The target confidence value may indicate an uncertainty value corresponding to the pixel associated with the target confidence value. Accordingly, a distribution of uncertainty values may be indicted by the plurality of target confidence values. A shape of the distribution may thereby depend on properties (e.g., distance, position, rotation, size and/or class) of an object within the BEV image. The training sample may further comprise a plurality of target value sets (e.g., classification and/or regression values) for each pixel.

Determining the correct values for the plurality of target confidence values is essential for the training to be effective. In essence, one wants to achieve a distribution of the values that represents a high value (e.g., 1) at edges (i.e., edge points of the object which are hit by the respective sensor) and wherein these values decay the higher the distance of the respective point is compared to the edges (e.g., decay to value o). There are different metrics suitable for determining such a distribution depending on the input data or the position, rotation, distance etc. of the corresponding object.

A possible way of determining respective values between 0 and 1 (i.e., 1 = zero distance to closest corner/edge to the sensor; 0 = maximal distance) for each pixel within a bounding box is given by equations (1)-(3).

$$w_{point} = (1 - \frac{L2(P, P_0)}{L2(P_3, P)}) \times \text{scale}$$

*Equation (1)*

$$w_{L-shape} = (1 - max\left(\frac{distance(P, Line(P_0, P_1))}{distance(P_0, P_2)}, \frac{distance(P, Line(P_0, P_2))}{distance(P_0, P_1)}\right)) \times \text{scale}$$

*Equation (2)*

$$w_{backline} = (1 - \frac{distance(P, Line(P_0, P_1))}{distance(P_0, P_2)}) \times \text{scale}$$

*Equation (3)*

$P_0$, $P_1$, $P_2$, $P_3$ refer to the corner points (also referred to as pixels) of the respective bounding box from closest ($P_0$) to highest ($P_3$) distance. P refers to the respective points within the bounding box for which the target confidence values (i.e., the importance/weighting) is to be calculated.

Equation (1) $w_{point}$ focuses the weights on the closest corner point, while equation (2) $w_{L-shape}$ focuses the weights along the two closest sides and $w_{backline}$ focuses the weights along the closest side. *L2* refers to the *L2* distance between the respective points, *distance* refers to the shortest distance between the respective point and the line between the two respective points provided as arguments for the *Line* function (e.g., a linear line function to connect the respective points). The *scale* factors may be used to control the spread of the targets based on the introduced sensor inaccuracies. Which equation is to be used may be selected for example based on the rotation of the object or the distance. For example, if the distance is above 40m equation (3) may be preferred instead of equation (2), as it is much less likely to see the third corner point $P_2$. In another example, if the rotation is less than 20 degrees also equation (3) may be used. There may also be further aspects considered when determining the values (e.g., use different weightings depending on object size, or take the two closest points to the object as active area for target selection). Further aspects may also consider to further weigh the *scale* i.e., the sensor-based inaccuracy by for example applying a respect inaccuracy margin (e.g., in pixels around the assumed boundary pixels) based on the distance.

Second, receiving an output from the model. The output may comprise at least a plurality of predicted confidence values. Each predicted confidence value may be associated with a pixel of the BEV image. The output may further comprise a plurality of predicted value sets (e.g., classification and/or regression values).

Third, adjusting a parameter set of the model according to a loss. The loss may be based (at least) on the plurality of predicted confidence values and the plurality of target confidence values. The loss may be further based on the plurality of predicted value sets and the plurality of target value sets.

Adjusting the parameter set of the model may comprise determining a subset (e.g., by setting a limit of selected values via a threshold and thus reducing the number of values used for adjusting) of the plurality of predicted confidence values. The loss may then be based only on the subset of the plurality of predicted confidence values and a corresponding subset of the plurality of target confidence values.

There are different ways for determining the subset. A first approach may be referred to as label-based approach. Accordingly, the subset may be selected based on label information associated with a subset of the plurality of pixels corresponding to the subset of the plurality of predicted confidence values.

A second approach may be referred to as sensor-based approach. Accordingly, the subset may be selected based on sensor information associated with the subset of pixels corresponding to the subset of the plurality of predicted confidence values.

A third approach may be referred to as performance-based approach. Accordingly, selecting the subset of the plurality of predicted confidence values may be based on a plurality of object detection scores (e.g., highest Intersection over Union, highest confidence value etc.). Each object detection score may be associated with a pixel of the subset of the plurality of pixels corresponding the subset of the plurality of predicted confidence values. These approaches may be combined.

Object detection during application

If the vehicle 105 is already equipped with a BEV object detection model trained according to aspects of the present invention, the generated BEV image comprising a plurality of pixels may be inputted into the trained BEV object detection model. The model may then output at least a plurality of predicted confidence values. The model output may further comprise a plurality of predicted value sets (e.g., classification and/or regression values).

Based on the corresponding model output, objects within the BEV image may then be detected. Detecting an object within the BEV image may comprise applying (e.g., multiplying, or other suitable arithmetic operations) the plurality of predicted confidence values on the plurality of predicted value sets. In the present example, vehicle 110 and vehicle 115 may be detected as objects.

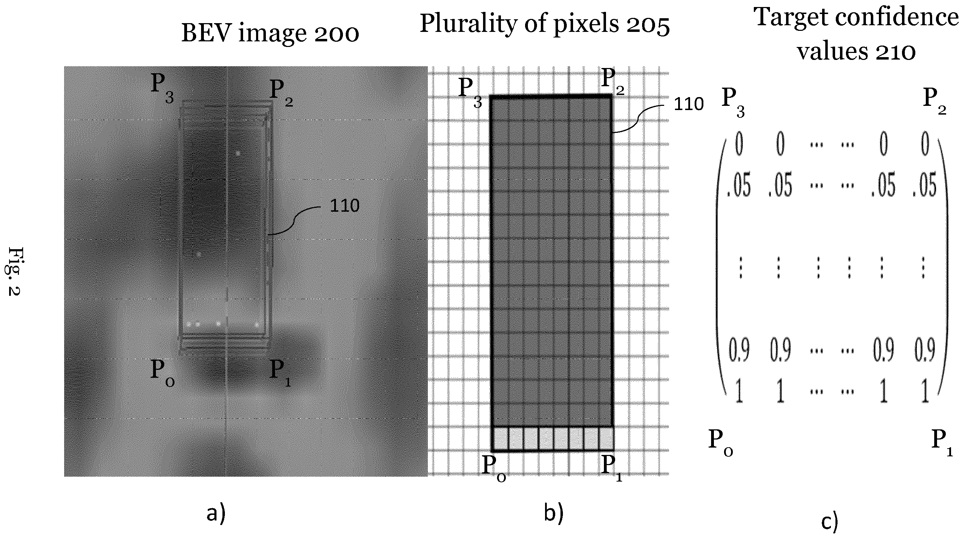

Fig. 2 illustrates a first training sample for training a BEV object detection model according to aspects of the present invention.

Section a) of Fig. 2 illustrates a BEV image 200. The BEV image 200 may relate to vehicle 110 of Fig. 1. In this example, the BEV image 200 may be generated based on radar signals 120 from vehicle 105. Points $P_0$ and $P_1$ relate to points of vehicle 110 being hit first from the corresponding radar signal 120 of vehicle 105. The shape/outline of vehicle 110 may be considered as a backline. This is because the radar signal 120 of vehicle 105 solely covered information from behind (i.e., from the back part of vehicle 110).

Section b) of Fig. 2 illustrates an abstraction of a plurality of pixels 205 of the BEV image 200. Pixels $P_0$ and $P_1$ again relate to the points of the vehicle 110 being hit first from the corresponding radar signal 120 of vehicle 105. The pixels between these points are considered as the target pixels the model shall learn to detect and which may then be considered for the further classification and/or regression task. In addition, further pixels may be considered as target pixels depending on the assigned confidence values (i.e., if the assigned confidence values are high enough which may be determined using a respective threshold).

Section c) of Fig. 2 illustrates a corresponding plurality of target confidence values 210. These may be used during training of a corresponding BEV object detection model as target values (e.g., to guide the adjusting of a set of parameters of the model, i.e., optimizing the model). As one can see, the values of the target confidence values are chosen to mirror the actual confidence (e.g., regarding information availability). As high information value is available for the backline of vehicle 110, the corresponding confidence values equal 1. The more far behind this backline, the less information is available about these parts/areas of vehicle 110. As a result, the confidence values also decrease accordingly (e.g., from 0.9 to .05 to 0 at the most far line of the bounding box of vehicle 110). It may also be possible to define a threshold for cutting of confidence values. For example, a threshold would be set to 0.9. Accordingly, values below 0.9 would be cut off and set to o. In the shown example, all values of the target confidence values 210 except the values of the 2 rows having values of 0.9 and 1 would be set to 0.

The respective distribution of the target confidence values 210 may depend on the adjusted value of the *scale* of equation 3. As explained with respect to equation 3, the value of the scale factor may *inter alia* depend on the sensor accuracy. If a sensor is very accurate, a distribution of the target confidence values can be less balanced, e.g., 1, 0.9, 0.8, 0.7 and 0 for the remaining pixels. In this case, the threshold would be set to 0.7. If a sensor is less accurate, a distribution of the target confidence values can be more balanced (e.g., 1, 0.9, 0.8 ... 0.05, 0 as shown in section 2c)). In this case, the threshold would be set to 0.

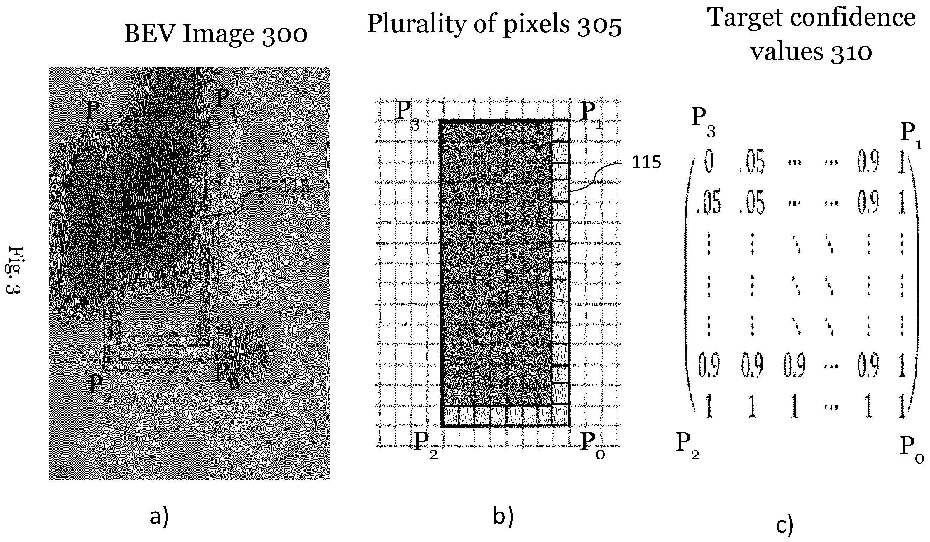

Fig. 3 illustrates a second training sample for training a BEV object detection model according to aspects of the present invention.

Section a) of Fig. 3 illustrates a BEV image 300. The BEV image 300 may relate to vehicle 115 of Fig. 1. In this example, the BEV image 300 may be generated based on radar signals 120 from vehicle 105. Points $P_0$, $P_1$ and $P_2$ relate to points of vehicle 115 being hit first from the corresponding radar signal 120 of vehicle 105. The shape/outline of vehicle 115 may be considered as a L-shape. This is because the radar signal 120 of vehicle 105 solely covered information from behind (i.e., from the back part of vehicle 115) and from right (i.e., from the right side of vehicle 115).

Section b) of Fig. 3 illustrates an abstraction of a plurality of pixels 305 of the BEV image 300. Pixels $P_0$, $P_1$ and $P_2$ again relate to the points of the vehicle 115 being hit first from the corresponding radar signal 120 of vehicle 105. The pixels in the L-shape between these points are considered as the target pixels the model shall learn to detect and which are then considered for the further classification and/or regression task. In addition, further pixels may be considered as target pixels depending on the assigned confidence values (i.e., if the assigned confidence values are high enough which may be determined using a respective threshold).

Section c) of Fig. 3 illustrates a corresponding plurality of target confidence values 310. These may be used during training of a corresponding BEV object detection model as target values (e.g., to guide the adjusting of a set of parameters of the model, i.e., optimizing the model). As explained with respect to Fig. 2, it may also be possible to define a threshold for cutting of confidence values. For example, a threshold would be set to 0.9. Accordingly, values below 0.9 would be cut off and set to 0. In the shown example, all values of the target confidence values 310 except the values of the 2 rows and columns having values of 0.9 and 1 would be set to 0.

The respective distribution of the target confidence values 310 may depend on the adjusted value of the *scale* of equation 3. As explained with respect to equation 3, the value of the scale factor may *inter alia* depend on the sensor accuracy. If a sensor is very accurate, a distribution of the target confidence values can be less balanced. For example, the distribution may then only include confidence values between 1 to 0.7 while the remaining values are cut off to 0 by defining the threshold respectively. If a sensor is less accurate, a distribution of the target confidence values can be more balanced. For example, the confidence values may then decrease evenly from 1 to 0 as shown in section 3c) by the values of the target confidence values 310.

The method(s) according to the present invention may be implemented in terms of a computer program which may be executed on any suitable data processing device comprising means (e.g., a memory and one or more processors operatively coupled to the memory) being configured accordingly. The computer program may be stored as computer-executable instructions on a non-transitory computer-readable medium.

Embodiments of the present disclosure may be realized in any of various forms. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**Claims**

1. A computer-implemented method for training a birds-eye-view, BEV, object detection model, the method comprising the steps of:

   inputting a training sample into the model, wherein the training sample comprises a BEV image (200, 300) comprising a plurality of pixels (205, 305), and a plurality of target confidence values (210, 310), wherein each pixel of the plurality of pixels (205, 305) is associated with a target confidence value of the plurality of target confidence values (210, 310);
   receiving as output from the model at least a plurality of predicted confidence values, wherein each predicted confidence value is associated with a pixel of the plurality of pixels (205, 305); and
   adjusting a parameter set of the model according to a loss, wherein the loss is based at least on the plurality of predicted confidence values and the plurality of target confidence values (210, 310).

2. The method of the preceding claim 1, wherein a target confidence value of the plurality of target confidence values (210, 310)indicates an uncertainty value corresponding to the pixel of the plurality of pixels (205, 305) associated with the target confidence value; and
   wherein the plurality of target confidence values (210, 310)indicates a distribution of uncertainty values associated with the plurality of pixels.

3. The method of the preceding claim 2, wherein a shape of the distribution of uncertainty values depends on at least one of:
a distance, position, rotation, size and/or class of an object within the BEV image (200, 300).

4. The method of any one of the preceding claims, wherein adjusting the parameter set of the model comprises:

   determining a subset of the plurality of predicted confidence values (210, 310); and
   wherein the loss is based on the subset of the plurality of predicted confidence values and a corresponding subset of the plurality of target confidence values (210, 310).

5. The method of claim 4, wherein determining the subset of the plurality of predicted confidence values comprises: selecting the subset of the plurality of predicted confidence values based on label information associated with a subset of the plurality of pixels (205, 305) corresponding to the subset of the plurality of predicted confidence values (210, 310).

6. The method of claim 4, wherein determining the subset of the plurality of predicted confidence values comprises: selecting the subset of the plurality of predicted confidence values based on sensor information associated with a subset of the plurality of pixels (205, 305) corresponding to the subset of the plurality of predicted confidence values.

7. The method of claim 4, wherein determining the subset of the plurality of predicted confidence values comprises:

   selecting the subset of the plurality of predicted confidence values based on a plurality of object detection scores; and
   wherein each object detection score of the plurality of object detection scores is associated with a pixel of a subset of the plurality of pixels (205, 305) corresponding to the subset of the plurality of predicted confidence values.

8. The method of any one of the preceding claims, wherein the training sample further comprises a plurality of target value sets;

   wherein each pixel of the plurality of pixels (205, 305) is associated with a target value set of the plurality of target value sets;
   wherein the output of the model further comprises a plurality of predicted value sets; and
   wherein adjusting the parameter set of the model is further based on a loss between the plurality of predicted value sets and the plurality of target value sets.

9. The method of any one of the claims, wherein each pixel of the plurality of pixels (205, 305) is associated with an angle value and a distance value within the BEV image (200, 300); or wherein each pixel of the plurality of pixels (205, 305) is associated with first cartesian coordinate and a second cartesian coordinate.

10. A computer-implemented method for birds-eye-view, BEV, object detection, the method comprising the steps of:

    obtaining a BEV image (200, 300) comprising a plurality of pixels (205, 305);
    inputting the BEV image (200, 300) into a BEV object detection model trained according to any one of the claims 1 to 9;
    receiving, from the model, an output comprising at least a plurality of predicted confidence values; and
    detecting an object within the BEV image (200, 300) using the output of the model.

11. The method of claim 10, wherein the output of the model further comprises a plurality of predicted value sets; and wherein detecting the object within the BEV image (200, 300) comprises applying the plurality of predicted confidence values on the plurality of predicted value sets.

12. Computer program comprising instructions, which when executed by a computer, causes the computer to perform the method of any one of the claims 1-9 or 10-11.

13. A birds-eye-view, BEV, object detection model, wherein the model is trained according to any one of the claims 1 to 9.

14. A data-processing device comprising means configured to perform the method of any one of the claims 1-9 or 10-11.

15. A vehicle (105) comprising a data-processing device comprising means configured to perform the method of any one of the claims 10-11 and/or the model according to claim 13.

Fig. 1

EP 4 407 483 A1

Fig. 2

11

BEV image 200

Plurality of pixels 205

Target confidence values 210

a)

b)

c)

$P_3$ $P_2$

$P_3$ $P_2$

110

110

$P_0$ $P_1$

$P_0$ $P_1$

$P_3$ $P_2$

$$\begin{pmatrix} 0 & 0 & \cdots & \cdots & 0 & 0 \\ .05 & .05 & \cdots & \cdots & .05 & .05 \\ \vdots & \vdots & \vdots & \vdots & \vdots & \vdots \\ 0.9 & 0.9 & \cdots & \cdots & 0.9 & 0.9 \\ 1 & 1 & \cdots & \cdots & 1 & 1 \end{pmatrix}$$

$P_0$ $P_1$

Fig. 3

EP 4 407 483 A1

BEV Image 300

Plurality of pixels 305

Target confidence values 310

a)

b)

c)

Europäisches
Patentamt

European
Patent Office

Office européen
des brevets

# EUROPEAN SEARCH REPORT

Application Number

EP 23 15 3722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DI FENG ET AL: "Labels Are Not Perfect: Inferring Spatial Uncertainty in Object Detection", ARXIV.ORG, CORNELL UNIVERSITY LIBRARY, 201 OLIN LIBRARY CORNELL UNIVERSITY ITHACA, NY 14853, 18 December 2020 (2020-12-18), XP081844415, * abstract * * p.2, right col, first par. * * p.3, left col., second par. * * bridging par. on p.4-5 * * p.6, right col., first par. * * p.8, right col., last two pars. * * p.10, left col., first par. * * p.12-14, sections A and B * * figures 1, 5, 7, 9 * ----- | 1-15 | INV. G06F18/214 G06F18/2415 G06V10/143 G06V20/58 |
| | | | TECHNICAL FIELDS SEARCHED (IPC) |
| | | | G06F G06V |

The present search report has been drawn up for all claims

| Place of search | Date of completion of the search | Examiner |
|---|---|---|
| The Hague | 5 June 2023 | Wunderlich, Doreen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)